# EUROPÄISCHE PATENTANMELDUNG

(11) **EP 4 582 707 A1**
(43) Veröffentlichungstag der Anmeldung: **09.07.2025**
(21) Anmeldenummer: 24150361.4
(22) Anmeldetag: 04.01.2024
(51) Int. Cl.: F16C 11/06, F16C 11/04

(54) **SPHÄRISCHES GELENKLAGER FÜR EIN GELENKFAHRZEUG, GELENKFAHRZEUG UND VERFAHREN ZUM BETREIBEN EINES GELENKFAHRZEUGS**

(71) Anmelder: Browne, Denis, 22946 Trittau (DE)
(72) Erfinder: Browne, Denis, 22946 Trittau (DE)
(74) Vertreter: Seemann & Partner Patentanwälte mbB

(57) **Zusammenfassung**

Die Erfindung betrifft ein sphärisches Gelenklager (10), ein Gelenkfahrzeug und ein Verfahren zum Betreiben eines Gelenkfahrzeugs. Das sphärische Gelenklager (10) umfasst eine mit einem ersten Gelenkfahrzeugabschnitt verbindbare Gabelkonsole (12) mit einer oberen Gabel (14) und einer unteren Gabel (16), zwischen denen ein kugelförmiges zentrales Lagerteil (18) angeordnet ist, sowie eine mit einem zweiten Gelenkfahrzeugabschnitt verbindbare ringförmige Gelenkkonsole (30), in welcher eine Gleitschale (40) aus Kunststoff angeordnet und befestigt ist, die eine sphärische Lagerfläche (48) für das kugelförmige zentrale Lagerteil (18) bildet, die sich von oberhalb eines Äquators (20) des kugelförmigen zentralen Lagerteils (18) bis unterhalb des Äquators (20) erstreckt.

Das Gelenklager weist wenigstens einen Sensor auf, der ausgelegt und angeordnet ist, einen Verschleiß oder eine Beschädigung des Gelenklagers zu detektieren.

## Beschreibung

Die Erfindung betrifft ein sphärisches Gelenklager für ein Gelenkfahrzeug, ein Gelenkfahrzeug und Verfahren zum Betreiben eines Gelenkfahrzeugs.

Gelenkfahrzeuge mit sphärischen Gelenklagern zur Verbindung von miteinander angelenkt verbundenen Teilen sind in Form von Gelenkbussen oder schienengebundenen Fahrzeugen wie Straßenbahnen, Trams o.ä. bekannt. Solchen Gelenkfahrzeugen oder Gliederfahrzeugen ist gemeinsam, dass sie aus mehreren gelenkig verbundenen, betrieblich nicht trennbaren Teilen bzw. Abschnitten bestehen, zwischen denen ein Durchgang während der Fahrt möglich ist.

Sphärische Gelenklager verbinden die Teile der Gelenkfahrzeuge so, dass sie sowohl kurvengängig sind als auch in begrenztem Umfang Verschwenkungen um eine Längsachse und eine horizontale Querachse des Gelenkfahrzeugs ermöglichen, also Dreh-, Nick- und Wankbewegungen. Die beiden Fahrzeugteile sind mit jeweils einem ersten bzw. zweiten Lagergehäuse des sphärischen Gelenklagers verbunden, wobei diese beiden Lagergehäuse in den für das Lager relevanten Teilen sphärisch mit konzentrischen inneren und äußeren sphärischen Lagerflächen aufgebaut sind und sich um einen gemeinsamen Mittelpunkt gegeneinander verdrehen können. Die Lagergehäuse werden über Schraub- bzw. Schraubbolzenverbindungen mit den Fahrzeugteilen verbunden.

Die Amplitude der mit solchen sphärischen Gelenklagern möglichen Dreh-, Nick- und Wankbewegungen wird zum einen vom Gelenklager selbst, stärker aber von den Abmessungen der daran befestigten Gelenkfahrzeugteile begrenzt, also beispielsweise den Gelenkbusabschnitten oder Tramwagen. Während Drehbewegungen (Kurven) im eingebauten Zustand des sphärischen Gelenklagers typischerweise relative Winkel zwischen den Längsachsen der Fahrzeugteile von bis zu 20° bis 30° erlauben, sind die Nick- und Wankbewegungen auf kleinere Winkel begrenzt, beispielsweise bis zu ±5°. Insofern handelt es sich bei den beiden Lagergehäusen um Werkstücke mit abschnittsweise konvexen bzw. konkaven aufeinander aufliegenden sphärischen Lagerflächen, deren Radien aufeinander angepasst gewählt sind, um eine großflächige Verteilung der auf die Lagerflächen wirkenden Kräfte zu erreichen und punktuelle Druckspitzen zu vermeiden.

Gelenkfahrzeuge sind üblicherweise schwere Fahrzeuge, sodass die Gelenklager hohen Belastungen standhalten müssen. Die Gelenklager bestehen daher zu großen Teilen aus korrosionsbeständigem Stahl mit hoher Festigkeit. Um ein möglichst widerstandsarmes Gleiten zu ermöglichen, wird eine sphärische Lagerfläche durch einen Kunststoffliner bzw. eine Gleitschale aus Kunststoff gebildet, die mit Stahl einen geringen Gleitwiderstand bildet. Eine solche Gleitschale aus Kunststoff weist eine geringere Festigkeit auf als der Stahl, der im Rest des Gelenklagers eingesetzt wird, und unterliegt daher wesentlich höherem Verschleiß. Ist die Gleitschale verschlissen, dann klappert das Lager und die Fahrsicherheit verschlechtert sich. Eine Überprüfung des Verschleißes im Rahmen von regelmäßigen Wartungsarbeiten ist daher notwendig. Verschleißmessungen des Gelenklagers sind allerdings sehr aufwendig und akkurate Messungen nur an ausgebauten Gelenklagern möglich. Bei Überlastungen, wie beispielsweise bei einem Unfall, werden die beiden Lagergehäuse außerdem stark punktuell gegeneinandergedrückt, wodurch die Kunststoffgleitschale beschädigt werden kann.

In einer Bauform sphärischer Gelenklager, die im Englischen als "spherical plain bearing" oder "ball-and-socket coupling" bezeichnet wird, befindet sich im Zentrum eine Kugel, meist aus Metall, die vertikal nach oben und unten mit jeweils einer planen Fläche abgeschnitten ist, welche zur Einpassung und Befestigung in einer gabelförmigen Konsole eines ersten der beiden zu verbindenden Fahrzeugteile dienen. Hierzu gibt es mehrere Möglichkeiten, nämlich eine Schraubverbindung durch mehrere Schrauben in einer oder beiden Endflächen, oder eine Bolzenvariante, in der die zentrale Kugel mittig durch einen einzelnen starken Bolzen gehalten wird, der durch einen zylindrischen vertikal ausgerichteten Hohlraum in der Kugel hindurchgeführt ist.

Die Kugel wird von einem äußeren ringförmigen Lagerteil gehalten, das in einer ringförmigen Halterung aus Stahl eine ebenfalls ringförmige Gleitschale aus Kunststoff aufnimmt, deren sphärische Innenfläche die Lagerfläche für die zentrale Kugel bildet und den gleichen Krümmungsradius wie diese aufweist. Diese ringförmige Halterung ist über eine weitere Konsole mit dem zweiten zu verbindenden Fahrzeugteil verbunden. Die Gleitschale ist so geformt, dass sie die zentrale Kugel in vertikaler Richtung sowohl nach unten als auch nach oben lagert. Um die Kugel in die Gleitschale aufnehmen zu können, ist diese auf der Höhe des Äquators der Kugel, also auf der Höhe des größten Umfangs, in zwei Halbschalen geteilt, die jeweils einen Bereich der zentralen unterhalb bzw. oberhalb des Äquators aufnehmen.

Bedingt durch den Umstand, dass das Lagerteil mit der zentralen Kugel meist von oben Druck belastet wird, ist in vielen Fällen das Lager nicht symmetrisch um den Äquator der Kugel, also auf der Höhe des größten Umfangs, zentriert, sondern etwas darunter. In solchen Fällen ist der Abstand vom Äquator der Kugel zur oberen Endfläche kleiner als der Abstand des Äquators zur unteren Endfläche, und auch die konkave Lagerfläche der Kunststoffgleitschale ist entsprechend so geneigt, dass sie eine größere Unterstützung in vertikaler Richtung nach unten bietet als nach oben, bzw. hat die unter Halbschale der Gleitschale eine größere Ausdehnung in vertikaler Richtung als die obere Halbschale. Dies bedeutet auch, dass der Innenradius der Unterkante der Lagerfläche der Gleitschale kleiner ist als der Innradius der Oberkante der Lagerfläche.

Neben den zu erwartenden Beschädigungen der Kunststoffgleitschale kann bei starker Belastung auch eine Schraubverbindung zwischen der Kugel und der gabelförmigen Konsole brechen.

Hiervon ausgehend ist es eine Aufgabe der vorliegenden Erfindung, den Betrieb von Gelenkfahrzeugen mit sphärischen Gelenklagern mit weniger Aufwand sicherer zu gestalten als bisher.

Diese Aufgabe wird durch ein sphärisches Gelenklager für ein Gelenkfahrzeug gelöst, umfassend eine mit einem ersten Gelenkfahrzeugabschnitt verbindbare Gabelkonsole mit einer oberen Gabel und einer unteren Gabel, zwischen denen ein kugelförmiges zentrales Lagerteil angeordnet ist, sowie eine mit einem zweiten Gelenkfahrzeugabschnitt verbindbare ringförmige Gelenkkonsole, in welcher eine Gleitschale aus Kunststoff angeordnet und befestigt ist, die eine sphärische Lagerfläche für die zentrale Kugel bildet, die sich von oberhalb eines Äquators der zentralen Kugel bis unterhalb des Äquators erstreckt, welches dadurch weitergebildet ist, dass das Gelenklager wenigstens einen Sensor aufweist, der ausgelegt und angeordnet ist, einen Verschleiß oder eine Beschädigung des Gelenklagers zu detektieren.

Ein solcher Sensor, oder eine Mehrzahl solcher Sensoren, ermöglicht es, die Funktionstüchtigkeit des Gelenklagers bzw. seiner Komponenten zu überwachen, die dann rechtzeitig ausgetauscht werden können.

In einer ersten Variante ist der Sensor als in die Gleitschale integrierter Verschleißsensor ausgebildet. Ein solcher Verschleißsensor, oder mehrere solcher Verschleißsensoren, überwachen den Verschleiß der besonders verschleißanfälligen Kunststoff-Gleitschale, die als Austauschteil ersetzt werden kann.

Vorzugsweise weist der Verschleißsensor in einem Neuzustand der Gleitschale einen vordefinierten Abstand zur sphärischen Lagerfläche der Gleitschale auf. Der vordefinierte Abstand definiert eine Verschleißgrenze, bei deren Unterschreitung die Gleitschale ersetzt werden muss. Dadurch, dass das Erreichen der Verschleißgrenze mittels eines oder mehrerer Verschleißsensoren automatisch erfasst wird, ist es nicht mehr notwendig, bei jeder Wartung das Gelenklager in aufwändiger und langwieriger Arbeit auseinanderzunehmen, sondern es genügt, dies dann zu tun, wenn die Gleitschale laut Sensorsignal tatsächlich verschlissen ist und ein Austausch notwendig geworden ist. Auch die aufwändige akkurate Messung des Verschleißes während der regelmäßigen Wartung kann entfallen. Ebenfalls wird sofort angezeigt, falls die Gleitschale durch eine übermäßige Belastung wie beispielsweise einen Unfall beschädigt worden ist und ausgetauscht werden muss. Dadurch wird der Betrieb des Gelenkfahrzeugs mit dem sphärischen Gelenklager sicherer und gleichzeitig weniger aufwendig.

Verschleiß der Gleitschale hat den Effekt, dass der Innenradius der Gleitschale sich leicht vergrößert und das zentrale kugelförmige Lagerteil sich in der Gleitschale tendenziell nach unten bewegt, wodurch der Verschleiß unterhalb des Äquators wiederum verstärkt wird. Daher ist der Verschleißsensor in der Gleitschale vorzugsweise unterhalb des Äquators angeordnet.

Das Prinzip von Verschleißsensoren ist von Fahrzeugbremsen, insbesondere Scheibenbremsen, bekannt, in denen Verschleißsensoren in die Bremsbeläge integriert sind. Die Einsatzbedingungen in Bremsbelägen unterscheiden sich jedoch grundsätzlich von denen in sphärischen Gelenklagern von Gelenkfahrzeugen. In Gelenklagern herrscht eine anhaltende und dauerhafte Druckbelastung bei äußerst geringer Relativgeschwindigkeit der gegeneinander beweglichen Lagerteile vor. Im Gegensatz dazu werden die Bremsen von Kraftfahrzeugen immer nur kurzzeitig eingesetzt, wobei aufgrund der großen Relativgeschwindigkeit zwischen Bremsscheibe und Bremsbacken und der großen eingesetzten Bremskraft ein starker Verschleiß der Bremsbacken eintritt, während die kinetische Energie des Fahrzeugs in thermische Energie der Bremsscheibe umgesetzt wird. Vor allem aufgrund der vorhandenen abrasiven Wirkung der sich gegenüber den Bremsbacken schnell drehenden Bremsscheiben sind die Verschleißsensoren an Fahrzeugbremsen typischerweise als elektrisch leitende Schlaufen ausgelegt, die um eine Verschleißgrenze nach innen in den Bremsbelag versetzt angeordnet sind und beim Erreichen der Verschleißgrenze sehr schnell durch die schnell rotierende Bremsscheibe gekappt werden, sodass die elektrische Leitung darin unterbrochen wird, sobald die Bremse nicht mehr betätigt wird und die Bremsbacken sich von der Bremsscheibe lösen. Der plötzliche Verlust der Leitfähigkeit des Sensors gibt das Signal für das Erreichen der Verschleißgrenze des Bremsbelags.

In sphärischen Gelenklagern würde dies nicht in gleicher Weise funktionieren, weil die schnelle Relativbewegung zwischen den Lagerteilen fehlt, mit denen eine Drahtschlaufe schnell und sicher gekappt werden kann. In Ausführungsformen kann der Verschleißsensor daher als voneinander isoliertes Paar von Drähten ausgebildet sein, die bei Kontakt mit einer elektrisch leitfähigen Oberfläche des zentralen kugelförmigen Lagerteils einen elektrischen Kontakt bilden. Solange das Drahtpaar in der Gleitschale eingebettet oder integriert ist, sind die Drähte voneinander isoliert, während der Kontakt mit der metallischen sphärischen Lagerfläche des zentralen kugelförmigen Lagerteils den elektrischen Kontakt herstellt. Um sicherzustellen, dass der Kontakt dann auch dauerhaft besteht, kann ein solcher Verschleißsensor an einer Stelle in die Gleitschale eingelassen sein, die in jeder im Betrieb vorkommenden Relativposition zwischen Gabelkonsole und Gelenkkonsole in Kontakt mit dem zentralen kugelförmigen Lagerteil bleibt. Alternativ kann in einer Fahrzeugsteuereinheit auch vorgesehen sein, dass ein Register, beispielsweise ein Speicherplatz oder eine Flag, mit dem der Verschleißsensor überwacht wird, beim erstmaligen Herstellen des Kontakts am Verschleißsensor auf einen Zustand geschaltet wird, der einen Verschleiß der Gleitschale anzeigt und das Register erst wieder nach einer Wartung oder einem Austausch der Gleitschale wieder zurückgesetzt werden kann.

Umgekehrt ist in Ausführungsformen vorgesehen, dass der Verschleißsensor als Drahtschlaufe mit durchgehender elektrischer Leitung ausgebildet ist, wobei bei auftretendem Verschleiß der Gleitschale die Drahtschlaufe mittels eines mechanisch durch das zentrale kugelförmige Lagerteil angepressten Unterbrechungsmittel unterbrochen, insbesondere mittels einer scharfen Kante des Unterbrechungsmittels gekappt oder an einer Sollbruchstelle gebrochen, wird. Mit einem solchen druckbeaufschlagten Unterbrechungsmittel wird das Problem umgangen, dass es im Gegensatz zu Fahrzeugbremsen an einer stark abrasiven Wirkung von Bremsscheiben fehlt, die ansonsten in ihrer schnellen Drehbewegung die Drahtschlaufe beim Bremsen zwangsläufig kappen würden. Diese Drahtschlaufe ist ein Beispiel für einen Verschleißsensor, der bei Verschleiß durch Kontakt und Druckbeaufschlagung durch das zentrale kugelförmige Lagerteil ein Signal für den Verschleiß abgibt.

Eine Umsetzung einer solchen Lösung kann so erfolgen, dass ein Abschnitt der Drahtschlaufe, der gegebenenfalls im Sinne einer Sollbruchstelle mit einem geringeren Durchmesser des Drahtes ausgestaltet ist als der Rest der Drahtschlaufe, mit mechanischen Haltern, Klemmen auf einer geeigneten Vorspannung gehalten wird oder auf einer Oberfläche eines unnachgiebigen ebenfalls in der Gleitschale eingebetteten Köpers aufliegt, und ein zweiter unnachgiebiger Körper mit seiner Rückseite an der Verschleißgrenze in der Gleitschale eingebettet ist und mit einer Kante den Abschnitt der Drahtschlaufe kontaktiert. Sobald durch Erreichen der Verschleißgrenze vom zentralen kugelförmigen Lagerteil ein Druck auf die Rückseite des zweiten unnachgiebigen Körpers ausgeübt wird, wird dieser mit seiner Kante auf den entsprechenden vorbereiteten Abschnitt gedrückt und sorgt so dafür, dass der Draht in diesem Abschnitt reißt und auf diese Weise ein Verschleißsignal erzeugt.

In einer zweiten Variante ist der Sensor als in die Gleitschale integrierter Verformungssensor, insbesondere Druckkontaktsensor, ausgebildet. Diese Art Sensor schlägt an, wenn die Gleitschale unter starker Belastung verformt wird, das Gelenk allerdings funktionstüchtig bleibt. Die Stärke der Verformung und die Notwendigkeit eines Austausches der Gleitschale kann in einer anschließend anzusetzenden Wartung ermittelt werden, oder ein Austausch kann direkt angesetzt werden.

Da solche Verformungen vor allem im Zug- bzw. Schubbetrieb auftreten und somit vorwiegend horizontale Komponenten aufweisen, ist der Verformungssensor in der Gleitschale vorzugsweise am Äquator angeordnet.

Ein oder mehrere solcher Verformungssensoren und der zuvor beschriebenen Verschleißsensoren können auch gleichzeitig eingesetzt werden.

Die Drähte des Verschleißsensors und/oder des Verformungssensors können in Ausführungsformen vertikal, horizontal, radial und/oder mit einem Knick an die sphärische Lagerfläche der Gleitschale herangeführt sein. Die Herstellung kann so erfolgen, dass die Gleitschale zunächst gegossen oder gefräst wird und anschließend eine oder mehrere Bohrungen eingefügt werden, in den oder die die einen oder mehreren Verschleißsensoren und/oder Verformungssensoren eingeführt werden. Die Bohrungen können gegebenenfalls anschließend noch verfüllt werden, um die einen oder mehreren Sensoren zu fixieren. Alternativ kann oder können der oder die Sensoren auch bereits beim Gießen der Gleitschale in der Form vorhanden sein und direkt mit eingegossen werden. Dies ermöglicht auch andere Formgebungen für die Sensoren, beispielsweise mit Kurven oder Knicken in der Führung der Drähte. Außerdem hat dies den Vorteil, dass die Sensoren in der Gleitschale nicht verrutschen können. Ferner können die einen oder mehreren Sensoren, insbesondere Verformungssensoren, auch zwischen einer oberen und einer unteren Halbschale der Gleitschale eingelegt sein, die von oben und von unten über das zentrale kugelförmige Lagerteil geführt und anschließend miteinander zur Gleitschale verbunden werden.

Mehrere Verformungssensoren und/oder Verschleißsensoren können in Ausführungsformen, insbesondere in Umfangsrichtung der Gleitschale verteilt angeordnet, vorhanden sein. Auf diese Weise ist es möglich, den Verschleiß und/oder die Verformung der Gleitschale auch in weniger beanspruchten Bereichen des Gelenklagers zu überwachen, etwa in den hinteren seitlichen Bereichen, die aber gegebenenfalls bei Unfällen oder anderen außergewöhnlichen Fahrzuständen in Mitleidenschaft gezogen werden können.

In einer weiteren Ausführungsform ist der Sensor in einem Übergang von einer Gabel der Gabelkonsole in das zentrale kugelförmige Lagerteil angeordnet. Diese Ausführungsform ist ebenfalls mit den zuvor beschriebenen Ausführungsformen des Sensors als Verschleißsensor und/oder als Verformungssensor kombinierbar. Der wenigstens eine Sensor kann in Ausführungsformen als Schraubensensor, insbesondere mit piezoelektrischen Messelementen, als Drucksensor in Form einer Unterlegscheibe, als Dehnungsmessstreifen, als Verdrehsensor oder als Bruchsensor, insbesondere als unterbrechbarer Stromkreis, ausgestaltet sein. Diese Arten von als oder mit Schrauben verwendbaren Sensoren sind bekannt und vermelden auf verschiedene direkte oder indirekte Weisen, wenn die Schraube ihre Spannkraft verliert. Dies erfolgt beispielsweise bei Verlust der Befestigung des zentralen kugelförmigen Lagerteils an der Gabelkonsole vor allem bei starken Belastungen, die dadurch entstehen, dass das die Gabelkonsole und die Gelenkkonsole mit einer die Spezifikationen des Gelenklagers übersteigenden Kraft belastet wird, etwa im Falle einer Notbremsung oder eines Unfalls.

So werden beispielsweise Drucksensoren, die als Unterlegscheibe angewendet werden, in einem solchen Fall einen kurzen Druckanstieg verzeichnen, gefolgt von einem rapiden Druckabfall, wenn die überwachte Schraube gebrochen ist und somit keine Zugkraft mehr entfaltet. Ein Verdrehsensor überwacht, ob sich die Schraube in ihrem Bohrgewindeloch durch ein Verdrehen lockert, betrifft also eine eher schleichende Art der Lockerung der Schraubverbindung, während Dehnungsmessstreifen oder Bruchsensoren wiederum die Funktionstüchtigkeit der Schraube direkt überwachen.

Die der Erfindung zugrundeliegende Aufgabe wird auch durch ein Gelenkfahrzeug mit einem hierüber beschriebenen erfindungsgemäßen sphärischen Gelenklager sowie einer Steuereinheit gelöst, die mit dem wenigstens einen Sensor verbunden ist. Ein solches Gelenkfahrzeug implementiert mit dem erfindungsgemäßen Gelenklager die gleichen Vorteile, Eigenschaften und Merkmale wie das Gelenklager.

Ferner wird die der Erfindung zugrundeliegende Aufgabe auch durch ein Verfahren zum Betreiben eines zuvor beschriebenen Gelenkfahrzeugs mit einem zuvor beschriebenen sphärischen Gelenklager gelöst, bei dem mittels der Steuereinheit überwacht wird, ob der wenigstens eine Sensor einen Verschleiß oder eine Beschädigung der Gleitschale und/oder ein Sensor in einem Übergang von einer Gabel der Gabelkonsole in das zentrale kugelförmige Lagerteil eine Lockerung der Befestigung des zentralen kugelförmigen Lagerteils anzeigt.

Unter Lockerung wird auch der vollständige Verlust der Befestigung, beispielsweise durch Bruch von Befestigungsschrauben, verstanden. Auch das Verfahren verwirklicht die gleichen Vorteile, Eigenschaften und Merkmale wie die anderen Erfindungsgegenstände.

In Ausführungsformen erzeugt die Steuereinheit im Falle einer durch ein Signal des wenigstens einen Sensors in einem Übergang von einer Gabel der Gabelkonsole in das zentrale kugelförmige Lagerteil angezeigten Beschädigung des Gelenklagers eine Meldung über die Beschädigung des Gelenklagers und zeigt diese Meldung einem Fahrzeugführer an, speichert sie zum späteren Auslesen und/oder übermittelt sie einem externen Computer, insbesondere eines Wartungssystems für das Gelenkfahrzeug.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung eines Querschnitts durch ein sphärisches Gelenklager für ein Gelenkfahrzeug,
- Fig. 2: eine perspektivische schematische Außenansicht des sphärischen Gelenklagers der Fig. 1,
- Fig. 3: eine Schnittdarstellung durch ein Detail eines erfindungsgemäßen sphärischen Gelenklagers,
- Fig. 4: eine weitere Schnittdarstellung durch ein Detail eines erfindungsgemäßen sphärischen Gelenklagers,
- Fig. 5: eine schematische Detaildarstellung eines zweiten Ausführungsbeispiels eines erfindungsgemäßen Gelenklagers,
- Fig. 6: eine schematische Detaildarstellung eines dritten Ausführungsbeispiels eines erfindungsgemäßen Gelenklagers und
- Fig. 7: eine schematische Detaildarstellung eines vierten Ausführungsbeispiels eines erfindungsgemäßen Gelenklagers.

In den Zeichnungen sind jeweils gleiche oder gleichartige Elemente und/oder Teile mit denselben Bezugsziffern versehen, so dass von einer erneuten Vorstellung jeweils abgesehen wird.

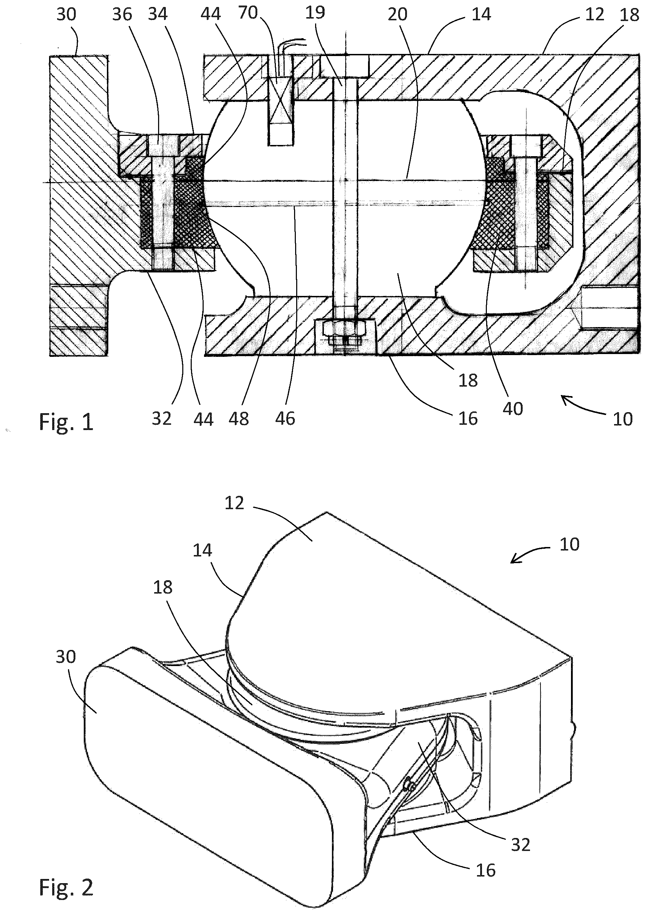

Fig. 1 zeigt eine schematische Darstellung eines Querschnitts durch ein sphärisches Gelenklager 10 für ein Gelenkfahrzeug der Bauart mit einem zentralen kugelförmigen Lagerteil 18, auch "Kugel" genannt, das zwischen einer oberen Gabel 14 und unteren Gabel 16 einer Gabelkonsole 12 in diesem Fall mittels einer Einspannung Schraube 19 eingespannt ist. Die Gabelkonsole 12 ist an ihrer Außenseite, in Fig. 1 rechts, mit einem Fahrzeugteil eines Gelenkfahrzeugs (nicht dargestellt) verbindbar.

Das zentrale kugelförmige Lagerteil 18 beschreibt keine vollständige Kugel, sondern ist an ihrer Oberseite und Unterseite jeweils mit einer horizontalen Fläche abgeplattet, die an den Innenseiten der unteren Gabel 16 und der oberen Gabel 14 anliegen. In diesem Beispiel ist die zentrale Kugel auch nicht symmetrisch zwischen den beiden Gabeln 14, 16 angeordnet, sondern etwas nach oben versetzt. Dies bedeutet, dass der Äquator 20 des zentralen kugelförmigen Lagerteils 18 gegenüber einer Mittellinie in der Mitte zwischen der oberen Gabel 14 und der unteren Gabel 16 nach oben versetzt ist. Die "nördliche Hemisphäre" der Kugel hat also eine geringere vertikale Ausdehnung als die "südliche Hemisphäre".

Komplettiert wird das Gelenklager 10 durch eine Gelenkkonsole 30, die mit einem zweiten Fahrzeugteil des Gelenkfahrzeugs (nicht dargestellt) zu verbinden ist oder verbunden ist. Die Gelenkkonsole 30 umfasst einen ringförmigen Teil 32, in dessen zentraler Öffnung das zentrale kugelförmige Lagerteil 18 angeordnet ist. Mit anderen Worten umfasst der ringförmige Teil 32 der Gelenkkonsole 30 die zentrale Kugel 18 der Gabelkonsole 12. Der ringförmige Teil 32 befindet sich dabei auf der Höhe der Mitte zwischen der unteren Gabel 16 und der oberen Gabel 14 der Gabelkonsole 12, sodass das Zentrum des ringförmigen Teils 32 etwas unterhalb des Äquators 20 des zentralen kugelförmigen Lagerteils 18 ist.

Die vertikale Ausdehnung des ringförmigen Teils 32 ist deutlich kleiner als die vertikale Ausdehnung des zentralen kugelförmigen Lagerteils 18, und auch die Gabelkonsole zwölf stellt zwischen der unteren Gabel 16 und der oberen Gabel 14 genügend Raum zur Verfügung, dass die Gelenkkonsole 30 gegenüber der Gabelkonsole 12 um mehrere Grad verschwenken kann.

In dem ringförmigen Teil 32 der Gelenkkonsole 30 befindet sich hierzu eine Gleitschale 40 aus Kunststoff, die eine sphärische Lagerfläche 48 für das zentrale kugelförmige Lagerteil 18 bildet. Der Kunststoff ist so gewählt, dass er einen geringen Reibungskoeffizienten mit der metallischen Oberfläche des zentralen kugelförmigen Lagerteils 18 hat. Die Gleitschale 40 ist von oben mittels Lagerdeckels 34 in den ringförmigen Teil 32 gesichert, der mittels einer Mehrzahl von Befestigungsschrauben 36 mit den ringförmigen Teil 32 verschraubt ist.

Auch die Gleitschale 40 ist mit ihrem geometrischen vertikalen Zentrum etwas unterhalb des Äquators 20 der zentralen Kugel 18 angeordnet, sodass die sphärische Lagerfläche 48 sich auf der südlichen Hemisphäre der zentralen Kugel 18 weiter erstreckt als auf der nördlichen Hemisphäre. Damit ist das sphärische Gelenklager 10 für Druckbelastungen, die die Gabelkonsole 12 nach unten drücken, stärker ausgebildet als für Druckbelastungen, die die Gabelkonsole 12 nach oben drücken. Es wird davon ausgegangen, dass dasjenige Fahrzeugteil des Gelenkfahrzeugs, das mit der Gabelkonsole 12 verbunden ist, mit seinem Gewicht stärker auf den sphärischen Gelenklager 10 lastet als das Fahrzeugteil, das mit der Gelenkkonsole 30 verbunden ist.

Die Gleitschale 40 besteht aus zwei Halbschalen bzw. Schalenhälften, nämlich einer unteren Schalenhälfte 42 und einer oberen Schalenhälfte 44. Die untere Schalenhälfte 42 kann in dem ringförmigen Teil 32 der Gelenkkonsole 30 verklebt sein, während die obere Schalenhälfte mittels der Verschraubung mit dem Lagerdeckel 34 gegen die untere Schalenhälfte 42 gedrückt und gesichert wird. Die obere Schalenhälfte 44 ist dabei aufgrund der vertikalen Asymmetrie des Gelenklagers 10 in der vertikalen Richtung kleiner als die untere Schalenhälfte 42. Die der zentralen Kugel 18 zugewandten Innenseiten der beiden Schalenhälfte 42, 44 bilden dabei zusammen die sphärische Lagerfläche 48.

In der Fig. 1 ist außerdem ein Bruchsensor 70 gezeigt, der durch die obere Gabel 14 der Gabelkonsole 12 in eine Aussparung in dem zentralen kugelförmigen Lagerteil 18 hineinragt. Bei einem katastrophalen Ereignis, bei dem die Verbindung zwischen dem zentralen kugelförmigen Lagerteil 18 und der Gabelkonsole 12 bricht, wird das zentrale kugelförmige Lagerteil 18 aus seiner Position in der Gabelkonsole 12 heraus bewegt werden und der Bruchsensor 70 dabei belastet werden. Diese Belastung wird der Bruchsensor 70 anzeigen, sodass eine Steuereinheit des Gelenkfahrzeugs die Information über das Versagen des sphärischen Gelenklagers 10 erhält und geeignete Maßnahmen wie beispielsweise ein zum Stillstand kommen des Gelenkfahrzeugs einleiten kann. Weitere Maßnahmen können beispielsweise die Information des Fahrers oder einer angeschlossenen Werkstatt sein.

Fig. 2 eine perspektivische schematische Außenansicht des sphärischen Gelenklagers der Fig. 1, aus der sich die Proportionen der einzelnen Bestandteile der Gabelkonsole 12 mit den Gabeln 14, 16 einerseits und der Gelenkkonsole 30 mit dem ringförmigen Teil 32 ergeben. In dem Zwischenraum zwischen der oberen Gabel 14 der Gelenkkonsole 12 und dem ringförmigen Teil 32 der Gelenkkonsole 30 ist außerdem ein Teil der nördlichen Hemisphäre des zentralen kugelförmigen Lagerteils 18 sichtbar. Die Gleitschale 40 und die sphärische Lagerfläche 48 sind perspektivisch verdeckt. Es ergibt sich aus Fig. 2, dass das sphärische Gelenklager nicht nur Nickbewegungen vollziehen kann, also Drehungen um eine horizontale Querachse, sondern Nick- sowie Roll- bzw. Wankbewegungen, also Relativdrehungen um eine vertikale Achse durch das Zentrum bzw. um eine Längsachse des zentralen kugelförmigen Lagerteils 18.

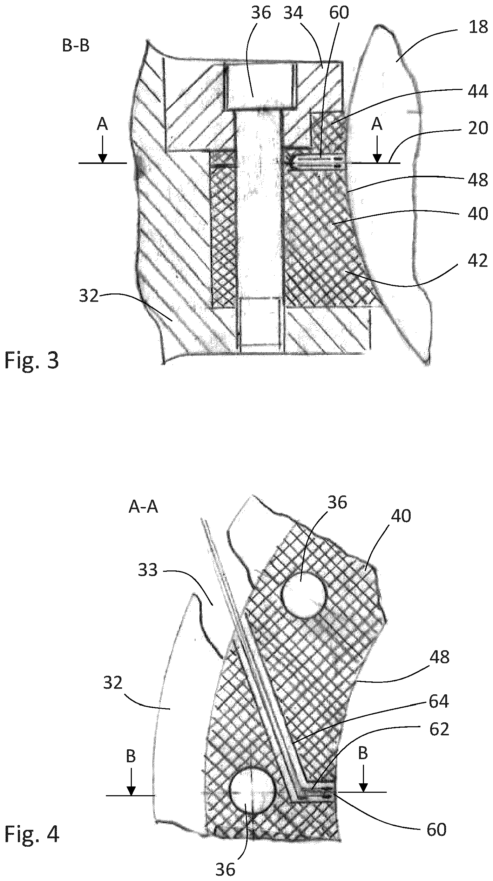

Fig. 3 eine Schnittdarstellung durch ein Detail eines erfindungsgemä-ßen sphärischen Gelenklagers 10. in diesem Fall befindet sich auf der Höhe des Äquators 20 des zentralen kugelförmigen Lagerteils 18 in der Gleitschale 40 ein Verformungssensor 60. Der Verformungssensor 60 liegt in oder unter der sphärischen Lagerfläche 48 nahe an der Oberfläche des zentralen kugelförmigen Lagerteils 18 und gibt ein Signal, wenn aufgrund einer Belastung der Gleitschale 40 das zentrale kugelförmige Lagerteil 18 eine Kraft auf den Verformungssensor 60 ausübt. Im gezeigten Fall befindet sich der Verformungssensor 60 in der Spalte zwischen der unteren Schalenhälfte 42 und der oberen Schalenhälfte 44 der Gleitschale 40, also am Äquator 20 des Gelenks.

Fig. 4 ist eine weitere Schnittdarstellung durch ein Detail des erfindungsgemäßen sphärischen Gelenklagers gemäß Fig. 3, namentlich entlang dem Schnitt A-A, der in Fig. 3 kenntlich gemacht ist. Umgekehrt zeigt die Schnittdarstellung in Fig. 3 die Schnittfläche entlang dem Schnitt B-B, der in Fig. 4 kenntlich gemacht ist. Die beiden Schnitte A-A und B-B sind räumlich senkrecht zueinander angeordnet, wobei der in Fig. 3 gezeigte Schnitt ein vertikaler Schnitt und der in Fig. 4 gezeigte Schnitt ein horizontaler Schnitt auf Höhe des Äquators 20 des zentralen kugelförmigen Lagerteils 18 ist.

In Fig. 4 lässt sich erkennen, dass der Verformungssensor 60 ein Drahtpaar 62 umfasst, das in einem Sensorkanal 64 verläuft, der einen Knick weg von einer Verbindungsschraube 36 vollzieht. Das Drahtpaar 62 wird über eine angedeutete Durchgangsöffnung 33 im ringförmigen Teil 32 der Gelenkkonsole 30 nach außen geführt. Die in Fig. 4 gezeigte Anordnung platziert den Verformungssensor 60 nahe an einer Verbindungsschraube 36 und somit in einen Bereich der Gleitschale 40, der mechanisch besonders gesichert ist. Durch die Nähe zur Verschraubung ist der Verformungssensor 60 weitgehend vor Scherbelastungen geschützt, die auf die obere und untere Schalenhälfte 42, 46 wirken und diese lokal in geringen Ausmaße gegeneinander arbeiten lassen können, ohne dass dies mit einem Verschleiß der sphärischen Lagerfläche 48 einhergeht.

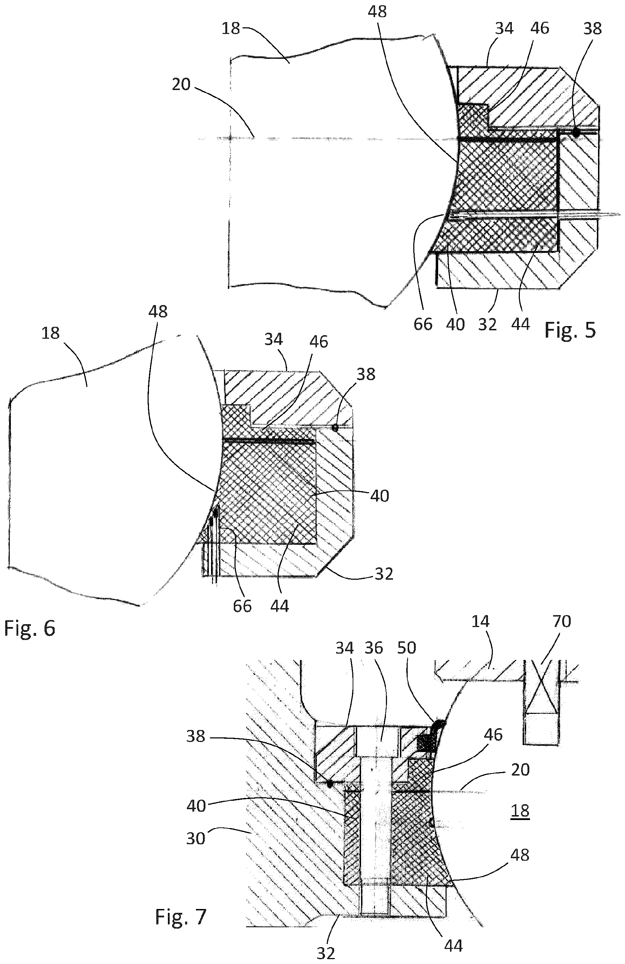

Fig. 5 zeigt eine schematische Detaildarstellung eines zweiten Ausführungsbeispiels eines erfindungsgemäßen Gelenklagers 10. im Unterschied zum Ausführungsbeispiel der Fig. 3 und 4 befindet sich in diesem Fall ein Verschleißsensor 66 nicht auf der Höhe des Äquators 20 des zentralen kugelförmigen Lagerteils 18, sondern in der unteren Schalenhälfte 44, etwa auf zwei Dritteln des vertikalen Abstands zwischen dem Äquator 20 und der Unterseite der Gleitschale 40. An etwa dieser Stelle sind die Belastungen, die durch den Druck des zentralen kugelförmigen Lagerteils 18 auf die sphärische Lagerfläche 48 wirken, am größten, so dass die sphärische Lagerfläche 48 an dieser Stelle besonders stark verschleißt. Die Kabel des Verschleißsensor 60 sind in diesem Fall horizontal nach außen geführt und gelangen durch eine Öffnung im ringförmigen Teil 32 der Gelenkkonsole 30 nach außen.

Fig. 5 zeigt außerdem, dass der Lagerdeckel 34 mittels eines O-Rings 38 gegenüber einer Seitenwand des ringförmigen Teils 32 der Gelenkkonsole 30 abgedichtet ist. Ein solcher O-Ring 38 kann auch in dem sphärischen Gelenklager 10 der Fig. 1 bis 4 vorhanden sein.

In Fig. 6 ist schematisch eine Detaildarstellung eines dritten Ausführungsbeispiels eines erfindungsgemäßen Gelenklagers 10 gezeigt. Diese unterscheidet sich von dem Ausführungsbeispiel Fig. 5 darin, dass das Kabel des Verschleißsensor 66 nicht horizontal, sondern vertikal nach unten weggeführt werden. Dies kann entweder durch eine entsprechende Durchgangsöffnung im ringförmigen Teil 32 der Gelenkkonsole 30 erfolgen, oder durch die zentrale Öffnung des ringförmigen Teils 32, in der das zentrale kugelförmige Lagerteil 18 aufgenommen ist.

Es versteht sich, dass die Ausführungsbeispiele der Figuren 3 bis 6 jeweils Schnittdarstellungen von Teilen des Gelenklagers 10 sind und beispielsweise auf verschiedenen Höhen und/oder an verschiedenen Stellen am Umfang der Gleitschale 40 mehrere Verformungssensoren 60 und/oder Verschleißsensoren 66 angeordnet sein können, um den die Belastung und/oder den Verschleiß der Gleitschale 40 beispielsweise an verschiedenen besonders verschleißanfälligen Stellen zu überwachen.

Fig. 7 zeigt eine schematische Detaildarstellung eines vierten Ausführungsbeispiels eines erfindungsgemäßen Gelenklagers. In diesem Fall ist neben dem Bruchsensor 70, der bereits in Fig. 1 dargestellt wurde, zu sehen, dass der obere Spalt zwischen dem Lagerdeckel 34 der Gelenkkonsole 30 und dem zentralen kugelförmigen Lagerteil 18 mittels eines umlaufenden Dichtungsring 50 mit einer Dichtlippe abgedichtet wird. Die umlaufende Dichtlippe verhindert, dass Schmutz in das sphärische Gelenklager 10 gerät, der zu einem verstärkten Verschleiß der sphärischen Lagerfläche 48 führen würde. Auch in diesem Ausführungsbeispiel der Fig. 7 können an einer oder mehreren Stellen Verschleißsensoren 60 gemäß einem oder mehreren der vorherigen Ausführungsbeispiele vorgesehen sein.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 10: Sphärisches Gelenklager
- 12: Gabelkonsole
- 14: obere Gabel
- 16: untere Gabel
- 18: kugelförmiges zentrales Lagerteil
- 19: Einspannschraube
- 20: Äquator
- 30: Gelenkkonsole
- 32: ringförmiger Teil der Gelenkkonsole
- 33: Durchgangsöffnung
- 34: Lagerdeckel
- 36: Befestigungsschraube
- 38: O-Ring
- 40: Gleitschale
- 42: untere Schalenhälfte
- 44: obere Schalenhälfte
- 46: Schmiernut
- 48: sphärische Lagerfläche
- 50: Dichtungsring
- 60: Verformungssensor
- 62: Drahtpaar
- 64: Sensorkanal
- 66: Verschleißsensor
- 70: Bruchsensor

## Patentansprüche

1. Sphärisches Gelenklager (10) für ein Gelenkfahrzeug, umfassend eine mit einem ersten Gelenkfahrzeugabschnitt verbindbare Gabelkonsole (12) mit einer oberen Gabel (14) und einer unteren Gabel (16), zwischen denen ein kugelförmiges zentrales Lagerteil (18) angeordnet ist, sowie eine mit einem zweiten Gelenkfahrzeugabschnitt verbindbare ringförmige Gelenkkonsole (30), in welcher eine Gleitschale (40) aus Kunststoff angeordnet und befestigt ist, die eine sphärische Lagerfläche (48) für das kugelförmige zentrale Lagerteil (18) bildet, die sich von oberhalb eines Äquators (20) des kugelförmigen zentralen Lagerteils (18) bis unterhalb des Äquators (20) erstreckt, **dadurch gekennzeichnet, dass** das Gelenklager (10) wenigstens einen Sensor aufweist, der ausgelegt und angeordnet ist, einen Verschleiß oder eine Beschädigung des Gelenklagers (10) zu detektieren.

2. Sphärisches Gelenklager (10) nach Anspruch 1, **dadurch gekennzeichnet, dass** der Sensor als in die Gleitschale (40) integrierter Verschleißsensor (66) ausgebildet ist.

3. Sphärisches Gelenklager (10) nach Anspruch 2, **dadurch gekennzeichnet, dass** der Verschleißsensor (66) in einem Neuzustand der Gleitschale (40) einen vordefinierten Abstand zur sphärischen Lagerfläche (48) der Gleitschale (40) aufweist.

4. Sphärisches Gelenklager (10) nach Anspruch 2 oder 3, **dadurch gekennzeichnet, dass** der Verschleißsensor (66) in der Gleitschale (40) unterhalb des Äquators (20) angeordnet ist.

5. Sphärisches Gelenklager (10) nach einem der Ansprüche 2 bis 4, **dadurch gekennzeichnet, dass** der Verschleißsensor (66) ein voneinander isoliertes Paar (62) von Drähten umfasst, die bei Kontakt mit einer elektrisch leitfähigen Oberfläche des zentralen kugelförmigen Lagerteils (18) einen elektrischen Kontakt bilden, und/oder als Drahtschlaufe mit durchgehender elektrischer Leitung ausgebildet ist, wobei bei auftretendem Verschleiß der Gleitschale (40) die Drahtschlaufe mittels eines mechanisch durch das zentrale kugelförmige Lagerteil (18) angepressten Unterbrechungsmittel unterbrochen, insbesondere mittels einer scharfen Kante des Unterbrechungsmittels gekappt oder an einer Sollbruchstelle gebrochen, wird.

6. Sphärisches Gelenklager (10) nach einem der Ansprüche 1 bis 5, **dadurch gekennzeichnet, dass** der Sensor als in die Gleitschale (40) integrierter Verformungssensor (60), insbesondere Druckkontaktsensor, ausgebildet ist.

7. Sphärisches Gelenklager (10) nach Anspruch 6, **dadurch gekennzeichnet, dass** der Verformungssensor (60) in der Gleitschale (40) am Äquator (20) angeordnet ist.

8. Sphärisches Gelenklager (10) nach einem der Ansprüche 2 bis 7, **dadurch gekennzeichnet, dass** Drähte des Verformungssensors (60) und/oder des Verschleißsensors (66) vertikal, horizontal, radial und/oder mit einem Knick an die sphärische Lagerfläche (48) der Gleitschale (40) herangeführt sind.

9. Sphärisches Gelenklager (10) nach einem der Ansprüche 1 bis 8, **dadurch gekennzeichnet, dass** mehrere Verformungssensoren (60) und/oder Verschleißsensoren (66), insbesondere in Umfangsrichtung der Gleitschale (40) verteilt angeordnet, vorhanden sind.

10. Sphärisches Gelenklager (10) nach einem der Ansprüche 1 bis 9, **dadurch gekennzeichnet, dass** der Sensor in einem Übergang von einer Gabel (14, 16) der Gabelkonsole (12) in das zentrale kugelförmige Lagerteil (18) angeordnet ist.

11. Sphärisches Gelenklager (10) nach Anspruch 10, **dadurch gekennzeichnet, dass** der Sensor als Schraubensensor, insbesondere mit piezoelektrischen Messelementen, als Drucksensor in Form einer Unterlegscheibe, als Dehnungsmessstreifen, als Verdrehsensor oder als Bruchsensor (70), insbesondere als unterbrechbarer Stromkreis, ausgestaltet ist.

12. Gelenkfahrzeug mit einem sphärischen Gelenklager (10) nach einem der Ansprüche 1 bis 11 sowie einer Steuereinheit, die mit dem wenigstens einen Sensor verbunden ist.

13. Verfahren zum Betreiben eines Gelenkfahrzeugs nach Anspruch 12 mit einem sphärischen Gelenklager (10) nach einem der Ansprüche 1 bis 11, **dadurch gekennzeichnet, dass** mittels der Steuereinheit überwacht wird, ob der wenigstens eine Sensor einen Verschleiß oder eine Beschädigung der Gleitschale und/oder eine Lockerung der Befestigung des zentralen kugelförmigen Lagerteils (18) anzeigt.

14. Verfahren nach Anspruch 13, **dadurch gekennzeichnet, dass** die Steuereinheit im Falle einer durch ein Signal der wenigstens einen Sensors angezeigten Beschädigung des Gelenklagers (10) eine Meldung über die Beschädigung des Gelenklagers (10) erzeugt und diese Meldung einem Fahrzeugführer anzeigt, zum späteren Auslesen speichert und/oder einem externen Computer, insbesondere eines Wartungssystems für das Gelenkfahrzeug, übermittelt.
